# DEMANDE DE BREVET EUROPEEN

(11) **EP 0 931 493 A1**
(43) Date de publication de la demande: **28.07.1999**
(21) Numéro de dépôt: 99400096.6
(22) Date de dépôt: 15.01.1999
(51) Int. Cl.: A47J 43/07, B01F 7/30

(54) **Dispositif à fouet pour appareil de préparation culinaire**

(30) Priorité: 22.01.1998 FR 9800824
(71) Demandeur: Ronic Industries, 71600 Paray-le-Monial (FR)
(72) Inventeur: Durix, Maurice, Baudemont, 71800 La Clayette (FR)
(74) Mandataire: Cabinet Martinet & Lapoux

(57) **Abrégé**

Afin de fouetter une préparation culinaire peu dense, telle que des blancs d'oeuf en neige, avec une vitesse de rotation de fouet d'abord lente puis augmentant progressivement, un bras a une première branche (421) liée à un capuchon entraîné en rotation directement ou à travers un réducteur de vitesse autour de l'axe (YY) d'une cuve par un arbre moteur. Une deuxième branche (422) s'étend vers le fond de la cuve. Un fouet (7) est monté à rotation libre autour de la deuxième branche et entre deux butées (424, 425). Le fouet (7) est un fil conformé en double hélice tronconique (72, 73). L'hélice tronconique inférieure a un angle au sommet sensiblement égal à celui d'une partie en vé du fond de cuve vu en coupe axiale.

## Description

La présente invention concerne un dispositif à fouet entraîné en rotation dans une cuve d'un appareil de préparation culinaire. Ce dispositif à fouet est conçu spécialement pour fouetter des blancs d'oeuf en neige, ou pour battre d'autres émulsions telles qu'un mélange de jaunes d'oeuf et d'huile émulsionnés ensemble pour obtenir de la mayonnaise, ou bien encore pour préparer une crème Chantilly ou une crème fouettée à partir de crème fraîche ou de crème fleurette.

Dans des appareils de préparation culinaire, dits également petits robots ménagers, le dispositif à fouet est entraîné en rotation par l'arbre moteur de l'appareil à une vitesse relativement faible constante comprise entre 500 et 700 tours/mn. Dans certains appareils, la vitesse constante de rotation peut être sélectionnée par paliers de quelques dizaines de tours/mn. Lorsque la vitesse de rotation de l'arbre moteur est trop élevée, certains dispositifs à fouet incorporent un réducteur de vitesse s'engrenant avec une extrémité de l'arbre moteur.

Le dispositif à fouet peut comprendre deux fouets diamétralement opposés qui tournent solidairement avec l'arbre moteur. Par exemple chaque fouet a la forme d'un vé plan en matière plastique contenu dans un plan radial à l'arbre moteur et ayant des ailes planes relativement larges, ajourées par des fentes verticales et horizontales. L'une des ailes du vé est libre et frôle la paroi interne de la cuve de l'appareil, et l'autre aile du vé est solidaire d'un capuchon monté sur une extrémité de l'arbre moteur. Deux tels fouets en vé à ailes larges planes sont monolithiques avec le capuchon pour être fabriqués en une seule pièce moulée en matière plastique.

Dans d'autres appareils de préparation culinaire, le fouet est constitué par plusieurs fils métalliques développés sensiblement suivant des génératrices d'un tronc de cône et liés à une rondelle traversée par une broche centrale et située à la grande base du tronc de cône. La broche est encliquetée dans un fourreau excentré d'une plaque tournant avec l'arbre moteur de l'appareil, afin que la broche décrive un cercle autour de l'axe de l'arbre de l'appareil et simultanément le fouet tourne sur lui-même au moyen d'un engrenage réducteur entre l'axe du fouet et l'arbre moteur.

Dans tous ces dispositifs à fouet, la rotation du fouet sur lui-même est créée par des moyens mécaniques d'entraînement en rotation entre l'arbre moteur et un support, capuchon ou broche, du fouet. La rotation du fouet débute avec la mise en marche de l'appareil à une vitesse constante directement proportionnelle à la vitesse de rotation de l'arbre moteur. Le passage brusque du fouet de l'état immobile à l'état rotatif à une vitesse relativement élevée n'est pas propice à une montée convenable de blancs d'oeuf en neige ou de toute émulsion à fouetter ou battre. En effet, au démarrage de la rotation de l'arbre moteur et du dispositif à fouet avec la rotation du ou des fouets sur eux-mêmes, une partie des blancs d'oeuf est centrifugée contre la surface interne de la paroi de la cuve.

La demande de brevet français FR-2 282 932 et le brevet allemand DE-402 411 divulguent un appareil mélangeur comprenant un organe agitateur qui tourne librement autour d'un bras incliné à 45° ou perpendiculaire à un arbre d'entraînement situé au centre d'une cuve. Selon la demande de brevet précitée, l'organe agitateur peut se déplacer sur le bras devant une butée à l'extrémité libre du bras et est constitué d'une plaque circulaire axiale au bras et sur laquelle des tiges de différentes longueurs sont disposées. Selon le brevet allemand précité, le bras autour duquel l'organe agitateur tourne est situé au voisinage de la partie supérieure de la cuve et a une forme en double trapèze isocèle si bien que la matière à mélanger est surtout brassée au niveau des parois de la cuve.

Les organes agitateurs connus précités ne sont pas bien adaptés pour battre des émulsions peu denses telles que des blancs d'oeufs. L'organe agitateur selon la demande FR-2 282 932 est lourd et a tendance à remonter le long du bras. L'organe agitateur selon le brevet DE-402 411 tourne autour d'un axe perpendiculaire à l'axe de rotation moteur et situé au-dessus du mélange et est soumis de manière discontinue à la résistance du mélange et donc déséquilibré.

L'objectif de l'invention est de fournir un dispositif à fouet pour appareil de préparation culinaire dans lequel des émulsions peu denses, telles que des blancs d'oeuf ou analogues, sont fouettés ou battus avec au moins un fouet tournant librement à une vitesse de rotation d'abord lente puis progressivement de plus en plus élevée, dès le démarrage de la rotation de l'arbre moteur de l'appareil, sans que le fouet vibre.

A cette fin, un dispositif à fouet pour un appareil de préparation culinaire qui comprend un arbre rotatif moteur, une cuve ayant un fond qui, en demi-coupe axiale suivant l'arbre moteur, a un profil sensiblement symétrique par rapport à un axe prédéterminé, un bras ayant une première branche entraînée en rotation autour de l'axe de la cuve par l'arbre moteur et une deuxième branche s'étendant suivant ledit axe prédéterminé vers le fond de la cuve, et un fouet monté à rotation libre autour de la deuxième branche, est caractérisé en ce que le fouet comprend une première portion hélicoïdale tronconique axée autour de la deuxième branche de bras et ayant une petite base montée à rotation libre autour de la deuxième branche de bras, la première portion hélicoïdale ayant un angle au sommet sensiblement égal à l'angle au sommet d'une partie en vé du fond de cuve vu en coupe axiale.

Le fouet selon l'invention peut comprendre une deuxième portion hélicoïdale tronconique ayant une grande base commune avec la première portion hélicoïdale tronconique et une petite base montée à rotation libre autour de la deuxième branche de bras.

Bien que les pas des première et deuxième portions hélicoïdales tronconiques du dispositif puissent être identiques, c'est-à-dire le pas dans le fouet hélicoïdal est constant, les première et deuxième portions hélicoïdales tronconiques du dispositif peuvent avoir des pas différents pour mieux équilibrer le fouet selon l'invention. En variante, la première portion hélicoïdale tronconique du dispositif a un pas augmentant progressivement depuis la petite base montée à rotation libre de celle-ci vers la grande base commune, et la deuxième portion hélicoïdale tronconique a un pas diminuant progressivement depuis la grande base commune vers la petite base montée à rotation libre de celle-ci.

Le montage à rotation libre, dit montage fou, du fouet autour du bras autorise le fouet à tourner à une très faible vitesse par rapport à l'arbre moteur au début du démarrage de ce dernier, et à une vitesse progressivement de plus en plus élevée lorsque la préparation culinaire devient plus volumineuse.

Le fouet comporte ainsi une première portion d'hélice ayant un profil similaire au profil sensiblement symétrique du fond. Des portions annulaires aux extrémités du fouet sont guidées librement autour de la deuxième branche de bras et maintenues entre des butées respectives sur la deuxième branche de bras afin que le fouet soit maintenu dans la cuve. Les butées sont par exemple amovibles ou intégrées à la deuxième branche par déformation. Entre ces butées, le fouet est monté à rotation libre de manière à maintenir le fouet à une position constante en hauteur dans la cuve pour affleurer le fond de la cuve. Ainsi, le fouet comporte des portions annulaires guidées librement autour de la deuxième branche de bras et maintenues entre des butées respectives sur la deuxième branche de bras. De préférence, les portions annulaires sont des boucles circulaires d'extrémité d'un fil métallique cintré constituant ledit fouet.

En fonction du volume de la préparation culinaire, deux bras ou plus peuvent être prévus. Par exemple, le dispositif à fouet comprend deux fouets montés à rotation libre autour de deuxièmes branches de deux bras symétriques par rapport à l'axe de la cuve et entraînés ensemble en rotation autour de l'axe de la cuve par l'arbre moteur.

Selon une réalisation à liaison directe entre arbre moteur et porte-accessoire, tel que le dispositif à fouet, le dispositif à fouet comprend un capuchon porte-fouet cylindrique qui est fixé de manière amovible autour de l'arbre moteur et auquel la première branche de bras est fixée. Le bras peut comprendre une troisième branche, de préférence parallèle à l'axe de la cuve, reliée à la première branche et sensiblement noyée dans le capuchon porte-fouet cylindrique de manière à renforcer la liaison métal/matière plastique entre bras et capuchon. De préférence, le capuchon porte-fouet entoure une jupe centrale de la cuve entourant sans contact l'arbre moteur afin de protéger le bloc-moteur de l'appareil au niveau de l'arbre moteur contre toute pénétration d'aliments.

Selon une autre réalisation à liaison indirecte par réducteur de vitesse entre arbre moteur et porte-accessoire, le dispositif à fouet comprend un réducteur de vitesse ayant un pignon central fixé de manière amovible autour de l'arbre moteur et un pignon planétaire engrenant dans le pignon central, et une troisième branche du bras reliée par un coude noyé dans un capuchon porte-fouet cylindrique à la première branche de bras. Le pignon planétaire est monté à rotation autour de la troisième branche. Le capuchon porte-fouet est monté à rotation de manière amovible autour de l'arbre moteur et soutenu par celui-ci et de préférence entoure une jupe centrale de la cuve entourant sans contact l'arbre moteur.

Le dispositif à fouet peut comprendre en outre un chapeau fixé sous un couvercle de la cuve, recouvrant au moins une partie du capuchon porte-fouet dans laquelle le pignon planétaire est logé, et comportant une couronne dentée interne s'engrenant avec le pignon planétaire et entourant le pignon central.

De préférence, chaque bras est une tige métallique coudée et le capuchon porte-fouet est en matière plastique.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en coupe axiale schématique d'une cuve à fond en W pour un appareil de préparation culinaire présentant un arbre moteur saillant verticalement dans la cuve depuis un bloc moteur et lié directement à un dispositif à fouet selon l'invention ;
- la figure 2 est une vue en perspective d'un dispositif à deux fouets hélicoïdaux selon l'invention ;
- les figures 3, 4 et 5 sont des vues en perspective, en coupe axiale et en perspective éclatée d'un dispositif à deux fouets comportant un réducteur de vitesse intégré, respectivement ; et
- la figure 6 est une vue en coupe axiale analogue à la figure 1 montrant l'augmentation de volume d'une préparation culinaire après fouettage ainsi que des couples entraînant en rotation un fouet sur lui-même, comparativement à la figure 1 au tout début de la rotation de l'arbre moteur.

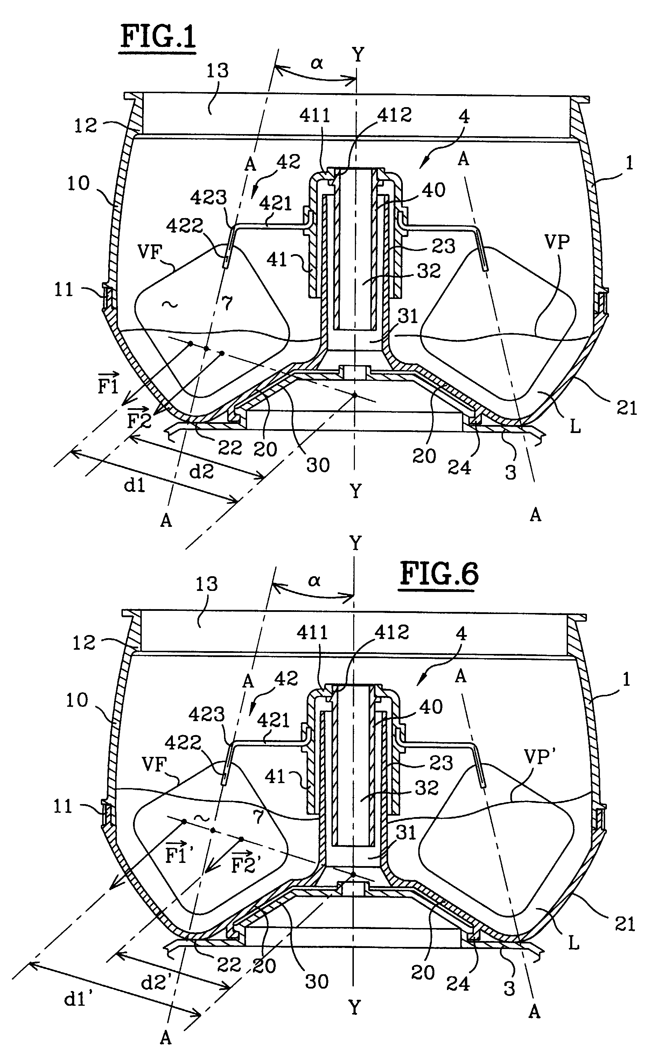

En référence à la figure 1, une cuve 1 en matière plastique de préférence transparente pour appareil de préparation culinaire présente une symétrie axiale autour d'un axe vertical YY.

Selon la réalisation illustrée, la cuve présente un fond 20-21 dont le profil en coupe axiale est en forme de W, c'est-à-dire de deux vés symétriques par rapport à l'axe YY, qui ont des sommets 22 formant un pied circulaire de la cuve autour de l'axe YY et qui sont reliés par une jupe cylindrique centrale 23 proéminente dans la cuve. Les branches internes des vés du W reliées à la base de la jupe 23 sont des génératrices d'une portion tronconique interne 20 du fond dont la grande base est formée par le pied circulaire 22 et dont la petite base supporte la jupe cylindrique 23. Les branches externes des vés du W sont des génératrices d'une portion tronconique externe 21 du fond dont la petite base est formée par le pied circulaire 22 et dont la grande base est emboîtée et fixée par collage à la grande base inférieure d'une paroi 10, cylindrique ou sensiblement en calotte sphérique 10 de la cuve 1. La jonction circulaire 11 entre la grande base de la portion tronconique externe 21 du fond de cuve et la paroi de cuve 10 est à un niveau supérieur à la petite base de la portion tronconique interne 20 du fond de cuve supportant la jupe 23 par rapport au pied 22 commun aux portions tronconiques 20 et 21. Cette différence de niveaux est due à ce que les génératrices des portions tronconiques 20 et 21 dans un demi-plan axial sont symétriques par rapport à un axe oblique AA passant par le sommet 22 du vé respectif du W et interceptant l'axe YY en un point relativement éloigné de l'ouverture supérieure 12 de la cuve pouvant être fermée hermétiquement par un couvercle 13. L'axe AA est en fait une génératrice d'un cône dont la base est formée par le pied circulaire 22, qui est centré sur l'axe de symétrie YY et qui présente un demi-angle au sommet α compris entre 5° et 15°, de préférence 10° environ.

La portion tronconique interne 20 du fond de cuve présente une cavité tronconique située sous la cuve ayant des pattes 24 pour fixer la cuve autour d'une protubérance tronconique 30 d'un socle 3 de l'appareil de préparation culinaire, le pied circulaire 22 de la cuve reposant sur le socle de la cuve. Le socle 3 constitue le bloc-moteur de l'appareil de préparation culinaire.

Un arbre moteur 31 rotatif autour de l'axe de symétrie YY saille de la protubérance 30 du socle 3 et traverse sans contact la jupe 23 de la cuve. L'extrémité supérieure 32 de l'arbre 31 incluse dans la jupe 23 présente une section non circulaire, par exemple hexagonale, de manière à s'emboîter en butée dans un manchon 40 d'un porte-accessoire 4, de section hexagonale interne complémentaire. Selon la réalisation illustrée, le porte-accessoire 4 comporte un capuchon de protection cylindrique 41 terminé par un épaulement supérieur 411 lié par collage ou assemblé par sections polygonales 412 à la périphérie supérieure du manchon 40. Le manchon de protection 41 entoure la majeure partie supérieure de la jupe 23 de manière à éviter la pénétration d'aliments dans celle-ci. Lorsque l'arbre 31 tourne, le manchon 40 tourne dans la jupe sans frottement avec celle-ci et le capuchon de protection 41 tourne autour de la jupe sans frottement avec celle-ci.

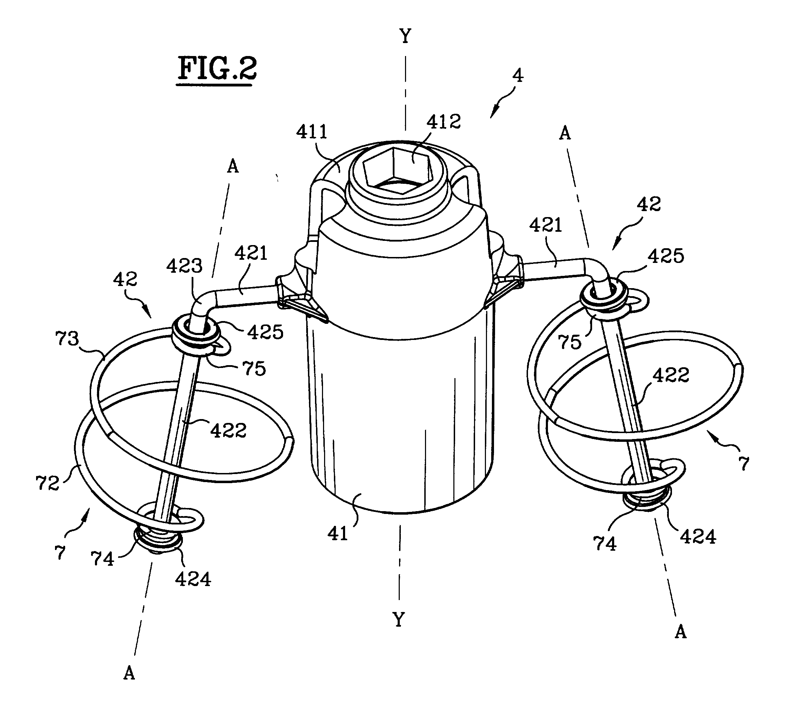

Selon l'invention, le porte-accessoire est un porte-fouet 4. Le porte-fouet comprend, outre le manchon 40 et le capuchon 41, au moins un bras coudé 42 supportant un fouet 7, ou deux bras 42 diamétralement opposés supportant chacun un fouet comme montré dans la figure 2. Le bras 42 est une tige métallique coudée et comporte une première branche 421 qui s'étend radialement au capuchon 41 et dont une extrémité y est noyée lors du moulage de celui-ci, le capuchon et le manchon 40 étant en matière plastique. L'autre extrémité de la branche 421 est reliée par un coude obtus 423 à une deuxième branche 422 du bras 42, plus longue que la première branche 421. La branche 422 s'étend suivant l'axe AA, c'est-à-dire s'étend dans un plan axial au porte-fouet 4 et à la cuve 1 et est inclinée de l'angle aigu α par rapport à l'axe de rotation YY du porte-fouet 4.

En variante, le porte-fouet comprend deux bras supportant chacun deux fouets, ou trois ou quatre bras supportant chacun un fouet, régulièrement répartis autour du capuchon 41 et positionnés dans des sections axiales de la cuve d'une manière analogue au bras du fouet 7 décrit ci-après.

En référence à la figure 2, deux fouets 7 sont montés respectivement entre des butées 424 et 425 de deux bras 42. Les butées 424 et 425 sont prévues respectivement à l'extrémité libre de la deuxième branche de bras 422 sous une portion annulaire de guidage inférieure 74 du fouet 7 et à proximité de l'autre extrémité de la branche 422, sous le coude 423, et plus précisément juste au-dessus d'une portion annulaire de guidage supérieure 75 du fouet 7. Les butées 424 et 425 sont des rondelles à griffe engagées dans des gorges adéquates de la branche 422, ou bien des déformations en forme de renflements sensiblement semi-toriques sur la branche 422. Les butées 424 et 425 empêchent de monter ou de descendre le fouet le long de la deuxième branche de bras 422. Le fouet 7 est ainsi monté à rotation libre autour de la branche 422 et immobile en translation avec faible jeu entre les butées 424 et 425.

Chaque fouet 7 est un fil métallique inoxydable conformé en double hélice tronconique, de faible section, typiquement de 2 mm.

Le fouet 7 est conformé à partir d'une portion de guidage annulaire inférieure 74 formée par une boucle torique butant sur la butée inférieure 424 jusqu'à une portion de guidage annulaire supérieure 75 formée par une deuxième boucle torique butant sous la butée supérieure 425, en une hélice tronconique inférieure 72 puis en une hélice tronconique supérieure 73. Les portions de guidage annulaires 74 et 75 aux extrémités du fouet 7 sont montées à rotation libre avec un léger jeu autour de la deuxième branche de bras 422. Les hélices sont de même sens et ont une grande base commune située sensiblement dans un plan médiateur à la branche 422 entre les butées 424 et 425 qui sont situées sensiblement aux sommets des hélices 72 et 73 respectivement. Les hélices 72 et 73 comprennent chacune une à trois spires environ et ont des longueurs sensiblement identiques.

Afin qu'un liquide plus ou moins visqueux L soit battu ou fouetté convenablement au niveau du fond 20-21 de la cuve 1, les dimensions de chaque fouet 7 sont telles que le fouet balaye quasiment un volume à section losangique ou carrée VF, autour de la jupe de cuve 23, entre les portions tronconiques 20 et 21 du fond comme montré à la figure 1, lorsque le porte-fouet 4 solidaire en rotation de l'arbre moteur 31 tourne autour de l'axe de symétrie YY de la cuve 1 et lorsque le fouet 7 est entraîné en rotation libre autour de l'axe AA de la deuxième branche 422 du bras 42. Cette rotation libre est due au déplacement résistant du fouet dans le liquide L lors de la rotation du porte-fouet.

L'hélice inférieure 72 et la portion annulaire 74 du fouet 7 avoisinent respectivement les portions tronconiques du fond 20-21 et le pied de cuve 22 de quelques millimètres, typiquement de 3 à 5 mm. Le fouet 7 tourne ainsi dans un volume en forme de couronne circulaire à section radiale en V autour de l'axe YY délimité sensiblement par la moitié inférieure du losange ou carré VF centré sur l'axe AA, comme montré à la figure 1. En particulier, l'angle au sommet du cône dans lequel l'hélice inférieure 72 tourne sur elle-même est sensiblement égale à l'angle au sommet du vé circulaire formé par les portions de fond tronconiques 20 et 21. La hauteur de l'hélice 72 est sensiblement égale à celle du vé de fond 20-21. Typiquement, chaque hélice 72, 73 a un diamètre de grande base de 70 mm environ, une hauteur comprise entre 40 et 70 mm environ, et un angle au sommet compris entre 45° et 60° environ.

Le fouet 7 selon l'invention présente un coût de fabrication relativement faible et est bien adapté à fouetter des émulsions peu denses, telles que des blancs d'oeuf. Pour des vitesses relativement élevées de l'arbre moteur et du porte-fouet, supérieures à 500 tours/mn environ, le fouet 7 ne vibre pas puisque son centre de gravité est sensiblement situé sur l'axe de rotation de fouet AA le long de la branche de bras 422, ne créant ainsi aucun déséquilibre dans l'ensemble fouet et bras.

De manière à mieux équilibrer encore le fouet 7, le pas de l'hélice inférieure 72 croît progressivement depuis la petite base de l'hélice 72 formée par la portion de guidage annulaire inférieure 74 vers la grande base, puis le pas de l'hélice supérieure 73 décroît progressivement depuis la grande base vers la petite base de l'hélice 73 formée par la portion de guidage annulaire supérieure 75.

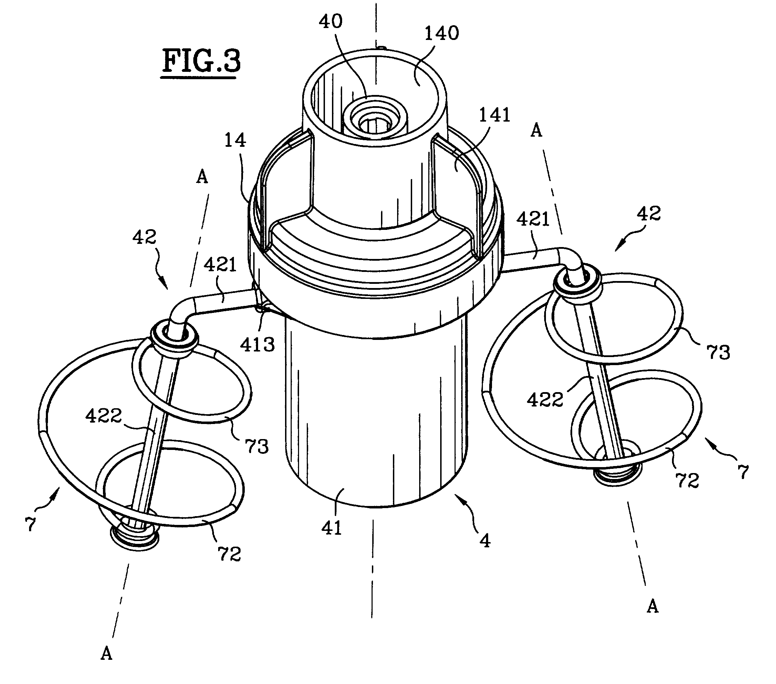

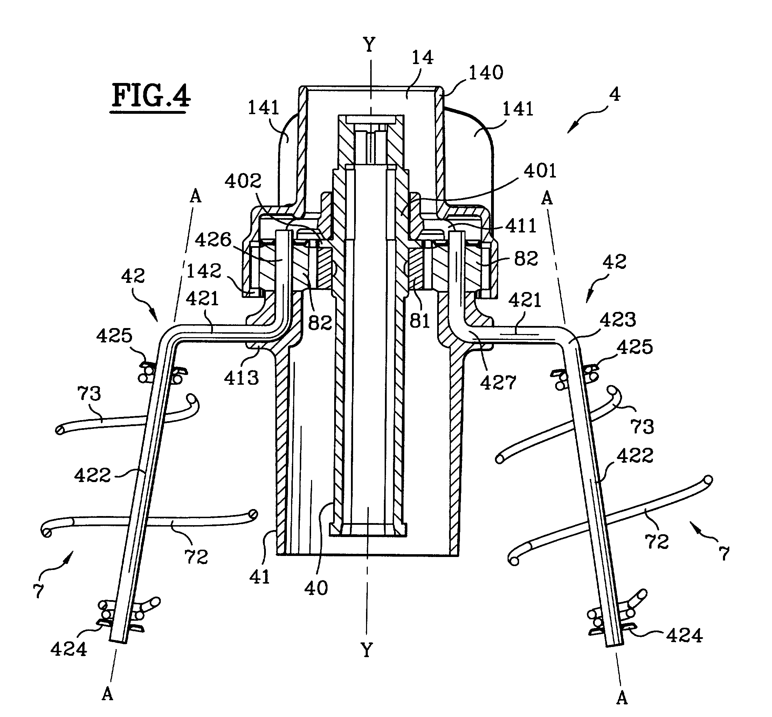

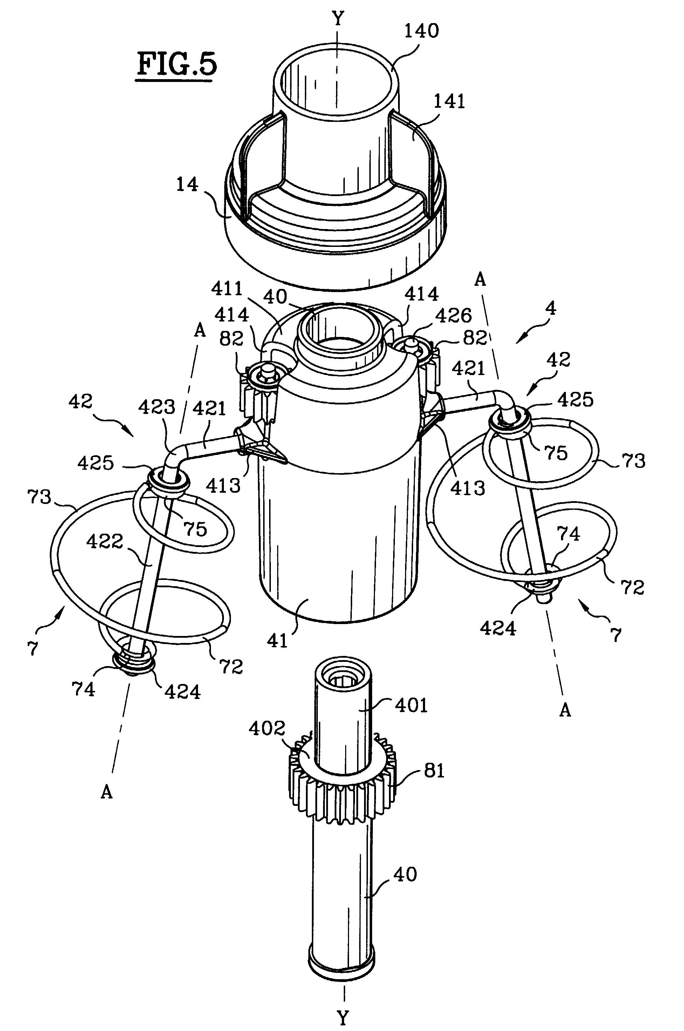

En référence aux figures 3, 4 et 5, le porte-fouet 4 comprend un réducteur de vitesse de rotation intégré au porte-fouet. Le réducteur inclut un pignon central 81 fixé autour du manchon 40, des pignons planétaires 82 respectivement associés aux bras 42, et une couronne fixe 142 solidaire de l'extrémité inférieure interne d'un chapeau 14 fixé sous le couvercle 13.

Chaque bras 42 comprend une troisième branche 426 prolongeant la branche radiale 421 et perpendiculaire à celle-ci. Un coude à angle droit 427 entre les branches 421 et 426 est noyé dans une saillie radiale 413 du capuchon 41 en matière plastique, ce qui renforce la liaison entre le bras 42 et le capuchon 41. La troisième branche 426 débouche dans un évidement semi-cylindrique 414 du capuchon, au-dessus de la saillie 413.

Autour de l'extrémité de la branche de bras 426 est monté à rotation l'un des pignons planétaires 82 qui est logé dans l'évidement 414. Lorsque le manchon 40 avec l'arbre moteur 31 tourne à une vitesse prédéterminée, le capuchon cylindrique 41 solidaire des bras 42 supportant chacun un fouet tourne à une vitesse plus petite que la vitesse prédéterminée, autour de l'extrémité supérieure 401 du manchon 40 qui soutient par un épaulement 402 l'extrémité supérieure 411 du capuchon.

Le chapeau cylindrique 14 comportant la couronne dentée interne 142 couvre l'extrémité supérieure du capuchon 41 jusqu'aux saillies 413 pour que la couronne dentée s'engrène sur les pignons 82 du réducteur. Le chapeau 14 comporte en partie supérieure un fût cylindrique 140 et trois ailettes 141 régulièrement réparties autour de celui-ci pour s'emboîter dans des logements correspondants ménagés sur la face inférieure interne du couvercle de cuve 13 et collés dans ceux-ci.

Le dispositif à fouet selon l'invention est particulièrement bien adapté pour fouetter des blancs d'oeuf versés dans le fond de la cuve 1 et les monter progressivement en neige.

Grâce à la rotation libre des fouets 7 autour des axes formés par les deuxièmes branches de bras 422, c'est-à-dire leur montage fou autour de ces branches, le mouvement en rotation des fouets sur eux-mêmes est dû à la résultante du travail des forces pendant la préparation culinaire. Au tout début de préparation, telle que des blancs d'oeuf, il n'existe quasiment pas de mouvement de rotation des fouets autour de leurs branches de bras 422, lors du démarrage de la rotation de l'arbre moteur 30 et du porte-fouet 4 autour de l'axe YY. Dès que la préparation acquiert une certaine consistance, qui a tendance à "freiner" la rotation des bras autour de l'axe YY, les fouets 7 se mettent progressivement à tourner autour des axes AA des branches de bras 422, créant ainsi les conditions optimales pour donner un maximum de volume à la préparation, celle-ci passant progressivement d'un volume faible VP montré à la figure 1 à un volume plus grand VP' montré à la figure 6. Le fouettage de la préparation présente ainsi une vitesse croissante progressivement, ce qui évite une centrifugation des blancs sur la surface interne de la paroi 10 de la cuve.

Le dispositif à fouet est soumis initialement à deux forces identiques F1 et F2 de même direction et d'intensité constante de part et d'autre du centre de gravité du fouet 7 situé sensiblement sur l'axe de rotation AA lorsque la préparation culinaire L de volume VP est immobile au début de la préparation culinaire. Lorsque le porte-fouet 4 commence à tourner autour de l'axe YY, la vitesse linéaire du liquide vers la portion tronconique externe 21 du fond est supérieure à la vitesse linéaire de ce même liquide vers la portion tronconique interne 20 du fond et la jupe centrale 23. Les deux forces sensiblement identiques F1 et F2 soumettent le fouet 7 à un couple externe (d1.F1) par rapport à l'axe YY différent d'un couple interne (d2.F2) par rapport à l'axe YY, cette différence de couples créant la rotation du fouet autour de la branche de bras 422.

Lorsque la viscosité dynamique de la préparation culinaire L augmente, les deux forces identiques précitées F1 et F2 deviennent des forces F1' et F2' inégales de part et d'autre du centre de gravité du fouet. Le volume de préparation VP' devient plus grand et entoure la base de la jupe 23 et atteint la jonction 11 au-dessus du fond 20-21, comme montré à la figure 6. Les distances d1' et d2' des points d'application des forces plus grandes F1' et F2' ont tendance à croître depuis l'axe de rotation AA, tout en montant en direction du couvercle 13, ce qui augmente la vitesse de rotation du fouet. Avec le fouet hélicoïdal 7 selon l'invention, comparativement aux fouets ou agitateurs connus, la composante d'élévation du fouet est plus rapidement prononcée, grâce à l'entrée d'air dans les hélices 72 et 73.

## Revendications

1. Dispositif à fouet pour un appareil de préparation culinaire qui comprend un arbre rotatif moteur (31), une cuve (1) ayant un fond (20, 21) qui, en demi-coupe axiale suivant l'arbre moteur, a un profil sensiblement symétrique par rapport à un axe prédéterminé (AA), un bras (42) ayant une première branche (421) entraînée en rotation autour de l'axe (YY) de la cuve (1) par l'arbre moteur (31) et une deuxième branche (422) s'étendant suivant ledit axe prédéterminé (AA) vers le fond de la cuve (1), et un fouet (7) monté à rotation libre autour de la deuxième branche, caractérisé en ce que le fouet (7) comprend une première portion hélicoïdale tronconique (72) axée autour de la deuxième branche de bras (422) et ayant une petite base (74) montée à rotation libre autour de la deuxième branche de bras, la première portion hélicoïdale ayant un angle au sommet sensiblement égal à l'angle au sommet d'une partie en vé du fond de cuve (20-21) vu en coupe axiale.

2. Dispositif conforme à la revendication 1, dans lequel le fouet (7) comprend une deuxième portion hélicoïdale tronconique (73) ayant une grande base commune avec la première portion hélicoïdale tronconique (72) et une petite base (75) montée à rotation libre autour de la deuxième branche de bras (422).

3. Dispositif conforme à la revendication 2, dans lequel les première et deuxième portions hélicoïdales (72, 73) ont des pas différents.

4. Dispositif conforme à la revendication 2 ou 3, dans lequel la première portion hélicoïdale tronconique (72) a un pas augmentant progressivement depuis la petite base montée à rotation libre (74) de celle-ci vers la grande base commune, et la deuxième portion hélicoïdale tronconique (73) a un pas diminuant progressivement depuis la grande base commune vers la petite base montée à rotation libre (75) de celle-ci.

5. Dispositif conforme à l'une quelconque des revendications 1 à 4, dans lequel des portions annulaires (74, 75) aux extrémités du fouet sont guidées librement autour de la deuxième branche de bras (422) et maintenues entre des butées respectives (424, 425) sur la deuxième branche de bras (422).

6. Dispositif conforme à la revendication 5, dans lequel les portions annulaires (74, 75) sont des boucles circulaires d'extrémité d'un fil métallique constituant ledit fouet (7).

7. Dispositif conforme à l'une quelconque des revendications 1 à 6, comprenant un capuchon porte-fouet cylindrique (41) qui est fixé de manière amovible autour de l'arbre moteur (31) par assemblage à sections polygonales (412) et auquel la première branche de bras (421) est fixée.

8. Dispositif conforme à la revendication 7, dans lequel le bras (42) comprend une troisième branche (426) reliée à la première branche (421) et sensiblement noyée dans le capuchon porte-fouet (41), de préférence le capuchon porte-fouet entourant une jupe centrale (23) de la cuve (1) entourant sans contact l'arbre moteur (31).

9. Dispositif conforme à l'une quelconque des revendications 1 à 8, comprenant un réducteur de vitesse ayant un pignon central (81) fixé de manière amovible autour de l'arbre moteur (31) et un pignon planétaire (82) engrenant dans le pignon central (81), et une troisième branche (426) du bras reliée par un coude (427) noyé dans un capuchon porte-fouet cylindrique (4) à la première branche de bras (421), le pignon planétaire (82) étant monté à rotation autour de la troisième branche (426), et le capuchon porte-fouet (4) étant monté à rotation de manière amovible autour de l'arbre moteur (31) et soutenu par celui-ci, de préférence le capuchon porte-fouet entourant une jupe centrale (23) de la cuve (1) entourant sans contact l'arbre moteur (31).

10. Dispositif conforme à la revendication 9, comprenant un chapeau (14) fixé sous un couvercle (13) de la cuve (1), recouvrant au moins une partie (411, 414) du capuchon porte-fouet (41) dans laquelle le pignon planétaire (82) est logé, et comportant une couronne dentée interne (142) s'engrenant avec le pignon planétaire (82) et entourant le pignon central (81).

11. Dispositif conforme à l'une quelconque des revendications 7 à 10, dans lequel le bras (42) est une tige métallique coudée et le capuchon porte-fouet (41) est en matière plastique.
